# EUROPÄISCHE PATENTSCHRIFT

(11) **EP 2 637 790 B1**
(45) Veröffentlichungstag und Bekanntmachung des Hinweises auf die Patenterteilung: **07.05.2014**
(21) Anmeldenummer: 10807699.3
(22) Anmeldetag: 16.12.2010
(51) Int. Cl.: B02C 15/00, B02C 15/08, B02C 23/08, B02C 23/26, B02C 15/04

(54) **VERFAHREN ZUR ZERKLEINERUNG VON MAHLGUT UND WÄLZMÜHLE**
PROCESS OF GRINDING AND GRINDING MILL
PROCÉDÉ DE BROYAGE ET BROYEUR

(43) Veröffentlichungstag der Anmeldung: 18.09.2013
(73) Patentinhaber: Loesche GmbH, 40549 Düsseldorf (DE)
(72) Erfinder: BÄTZ, André, 41363 Jüchen (DE); KEYßNER, Michael, 40489 Düsseldorf (DE); LANGEL, Jörg, 51147 Köln (DE); TRIEBS, Michael, 40221 Düsseldorf (DE)
(74) Vertreter: Heim, Florian Andreas
(86) Internationale Anmeldenummer: PCT/EP2010/007706
(87) Internationale Veröffentlichungsnummer: WO 2012/079605

(56) Entgegenhaltungen:
- DE-A1- 3 311 433
- DE-A1- 4 202 784

## Beschreibung

Die Erfindung betrifft ein Verfahren zur Zerkleinerung von Mahlgut gemäß dem Anspruch 1 und eine Wälzmühle gemäß dem Anspruch 7.

Die Erfindung ist insbesondere zur Feinstzerkleinerung von relativ harten und trockenen Materialien, beispielsweise Zementklinker und Hüttensand, aber auch von Zement-Rohmaterialien und Erzen, sowie für relativ große Wälzmühlen vorgesehen.

Bekannte vertikale Wälzmühlen, auch Walzenschüsselmühlen genannt, des LOESCHE-Typs zur Vermahlung von Zementklinker und Hüttensand, welche Produktraten von mehr als 300 t/h erreichen können, weisen zwei oder drei kraftbeaufschlagte Mahlwalzen und zugeordnete Glättwalzen zur Entlüftung des Mahlbettes auf. Mahlwalzen und Glättwalzen rollen auf einer Mahlbahn einer rotierenden Mahlschüssel beziehungsweise einem darauf gebildeten Mahlbett ab, wobei die Mahlschüssel einen Durchmesser von über 4 m bis nahe 7 m aufweisen kann. Die Anordnung von Glätt- oder Vorverdichtwalzen, auch Servicewalzen genannt, vor jeder Mahlwalze dient der Vermeidung von Vibrationen in einer luftbetriebenen vertikalen Wälzmühle und zur Gewährleistung des garantierten Durchsatzes (EP 0 406 644 B1, DE 42 02 784 C2).

Es ist bekannt, dass Mühlenvibrationen den Durchsatz und die Feinheit materialbedingt begrenzen können, sofern keine anderen äußeren Leistungsbegrenzungen, wie zum Beispiel zu kleine Filter, Gebläse oder Antriebe der Mahlanlage, existieren. Besonders bei sehr feinen und trockenen Produkten kann aufgrund der Mühlenvibrationen nur eine ungenügend hohe Mahlkraft in das Mahlbett eingebracht werden, auch wenn die Mühle in Bezug auf Festigkeit der Bauteile und Auslegung von Hydraulik- und Mühlenantrieb wesentlich größere Durchsätze zulassen würde.

Ursache für die Mühlenvibrationen ist offensichtlich eine Kombination von Mahlbetteigenschaften, wie Feinheit, Feuchte, Schüttdichte, Korngrößenverteilung, Kornform, innere Reibungskoeffizienten und Härte, in Verbindung mit der Mahlteilegeometrie, wie Staurandhöhe, Walzendurchmesser und Walzenbreite, sowie Mühleneinstellungen, insbesondere Massestrom, innerer Umlauf, Flächenpressung (Mahlkraft) und Mahlgeschwindigkeit (Mahlschüsseldrehzahl).

Die kausale Vernetzung der Einflussgrößen ist ein wesentlicher Grund für die Schwierigkeiten bei der Vorhersage und Bekämpfung der Mühlenvibrationen, welche hauptsächlich an der Leistungsgrenze der Mühle auftreten, so dass die Möglichkeiten für vibrationsmindernde Mühleneinstellungen begrenzt sind.

Es ist bekannt, insbesondere bei der Vermahlung von trockenem Mahlgut, eine Wassereindüsung vorzunehmen, um das Mahlbett zu optimieren und eine Verringerung der Mühlenvibrationen zu erreichen. Dabei wird durch horizontale Lanzen, welche mit Düsen versehen und jeweils vor den Mahlwalzen angeordnet sind, Wasser auf das Mahlbett gespritzt (DE 198 06 895 A1). Das Wasser wirkt sich positiv auf die innere Reibung im Mahlbett beim Einzug unter die Mahlwalzen aus, wodurch die Mühlenvibrationen wirksam verhindert werden und der Durchsatz der Mühle gesteigert werden kann. Allerdings erfordert der Einsatz von Wasser die Verdampfung innerhalb der Mühle, um die Restfeuchte im Fertiggut gering zu halten. Die Vorteile der Wassereindüsung in Bezug auf verringerte Vibrationen werden durch die stark erhöhte Feuerungswärmeleistung für die Trocknung zunichte gemacht. Bei Zementmühlen führt der Einsatz der Wassereindüsung außerdem zu einer Verschlechterung der Produkteigenschaften, insbesondere der Festigkeit. Außerdem steht Wasser in vielen Gegenden der Erde nicht in den notwendigen Mengen zur Verfügung oder der Einsatz von Wasser ist sogar gesetzlich verboten.

Es ist bekannt, dass Mühlenvibrationen und eine Übermahlung des aufgegebenen Mahlgutes unmittelbar miteinander zusammenhängen. Bei Walzenschüsselmühlen muss das in der Regel zentral aufgegebene Mahlgut entgegen der am Mahlschüsselrand wirkenden Fliehkraft angestaut werden, um von den einzelnen Mahlwalzen eingezogen zu werden und in einer Zerkleinerungszone zwischen den Mahlwalzen und einer Mahlbahn der Mahlschüssel zerkleinert zu werden. Bei Walzenschüsselmühlen des LOESCHE-Typs wird das An- oder Aufstauen des Mahlgutes auf einer ebenen, horizontalen Mahlbahn durch einen variabel einstellbaren Staurand mit einer vorgebbaren Höhe und Formgebung erreicht. Ohne einen Staurand am Umfang der rotierenden Mahlschüssel würde das Mahlgut die Mahlschüssel ungehindert verlassen, und es könnte sich kein ausreichend dickes Mahlbett zwischen den Mahlwalzen und der Mahlschüssel beziehungsweise der Mahlbahn ausbilden. Das für den Mühlendurchsatz erforderliche Anstauen von Mahlgut verhindert aber gleichzeitig, dass das zerkleinerte Mahlgut die Mahlschüssel verlassen kann. Fertig gemahlenes Mahlgut gerät somit erneut unter eine Mahlwalze, und es erfolgt eine Übermahlung, welche zu einem höheren spezifischen Energiebedarf der Wälzmühle führt. Indem der bei horizontalen, ebenen Mahlschüsseln beziehungsweise Mahlbahnen erforderliche Staurand durch seine Höhe und Formgebung zu einem höheren Mahlbett und zu einer längeren Verweilzeit des Mahlgutes auf der Mahlschüssel führt, kommt es zu Übermahlungen. Das höhere Mahlbett verursacht durch seine höhere Elastizität eine Federwirkung, welche sich negativ auf die Effizienz der Mahlung auswirkt und bei Großmühlen infolge des insgesamt feineren Mahlgutes auf der Mahlschüssel die Neigung zu Vibrationen noch erhöht.

Der Erfindung liegt die **Aufgabe** zugrunde, ein Verfahren zur Zerkleinerung von Mahlgut in einer Wälzmühle und eine Wälzmühle beziehungsweise Walzenschüsselmühle zu schaffen, mit welchen eine Übermahlung des Mahlgutes und Mühlenvibrationen weitgehend verhindert und gleichzeitig der spezifische Energiebedarf gesenkt werden kann.

Verfahrensmäßig wird die Aufgabe durch die Merkmale des Anspruchs 1 und vorrichtungsmäßig durch die Merkmale des Anspruchs 7 gelöst. Zweckmäßige und vorteilhafte Ausgestaltungen sind in den abhängigen Ansprüchen und in der Figurenbeschreibung beschrieben.

Ein Grundgedanke der Erfindung kann darin gesehen werden, nach jeder Mahlwalze das zu Feingut zerkleinerte Mahlgut möglichst vollständig zu entfernen und damit eine Übermahlung zu verhindern. Indem das Feingut nach jeder Mahlwalze aus dem Mahlbett und von der Mahlschüssel beziehungsweise Mahlbahn entfernt und einem aufsteigenden Förderluftstrom zugeführt wird, wird das Mahlbett hinsichtlich der Korngrößenverteilung gezielt verändert. Es erfolgt eine Vergröberung des Mahlbettes, und eine Übermahlung kann unterbunden beziehungsweise erheblich verringert werden, mit der Folge, dass eine erhebliche Erhöhung des Durchsatzes der Wälzmühle erreicht werden kann.

Beim erfindungsgemäßen Verfahren zur Zerkleinerung von Mahlgut in einer Wälzmühle, bei welchem zu zerkleinerndes Mahlgut einer rotierenden, mit einem Staurand versehenen Mahlschüssel aufgegeben und mit Hilfe ortsfester Mahlwalzen, welche auf einem vom aufgegebenen Mahlgut gebildeten Mahlbett kraftbeaufschlagt abrollen, in einer Zerkleinerungszone zwischen der Mahlwalze und der Mahlschüssel beziehungsweise Mahlbahn zerkleinert wird, wird erfindungsgemäß nach jeder Mahlwalze ein Luftstrahl mit einem festlegbaren Impuls aus einer Feingutdüse von oben auf eine Feingutkonzentrationszone gerichtet. Die Feingutkonzentrationszone wird jeweils unmittelbar nach der Zerkleinerungszone jeder Mahlwalze ausgebildet und ist weitgehend frei von aufgegebenem, zu zerkleinerndem Mahlgut. Dieses wird infolge der Drehung der Mahlschüssel auf spiralförmigen Bahnen den Mahlwalzen zugeführt, dabei jedoch von den Stirnseiten der Mahlwalzen abgelenkt, in deren "Schatten" sich dadurch zunächst ein Feingutbereich mit einer Feingutkonzentrationszone ausbilden kann.

Die Feingutkonzentrationszone und der flächenmäßig größere Feingutbereich bilden sich in der Nähe eines Staurandes direkt nach dem Austritt aus einer Mahlwalze und damit unmittelbar an die Zerkleinerungszone jeder Mahlwalze anschließend aus. Indem mit Hilfe wenigstens eines Luftstrahls aus einer Feingutdüse das Feingut zumindest aus der Feingutkonzentrationszone ausgeblasen beziehungsweise hoch geblasen wird, gelangt es in einen aufsteigenden Förderluftstrom, welcher durch einen zwischen der Mahlschüssel und dem Mühlengehäuse angeordneten Schaufelkranz zur pneumatischen Förderung des Feingutes und Zuführung zu einem Sichtprozess der Mühle zugeführt wird.

Wesentlich ist die Ausrichtung des Luftstrahls beziehungsweise der Feingutdüse auf die gebildete Feingutkonzentrationszone unmittelbar nach der Zerkleinerungszone jeder Mahlwalze und am Staurandbereich, so dass das Feingut aus- und hochgeblasen wird, bevor eine Mischung mit dem frisch zugeführten Mahlgut erfolgt und eine Übermahlung von der nächsten Mahlwalze vorgenommen wird. Im Wesentlichen erfolgt die Ausblasung des Feinguts aus einem relativ kleinen Dreieck, in Draufsicht gesehen, unmittelbar hinter der Zerkleinerungszone jeder Mahlwalze und begrenzt vom Staurand.

Eine Luftbeaufschlagung des zerkleinerten Mahlgutes nach jeder Mahlwalze mit Hilfe einer düsenartigen Einrichtung ist aus DE 33 11 433 A1 bekannt. Dabei wird jedoch das zerkleinerte Mahlgut mit Luft aus einer Düsenöffnung eines hohlen Schrappers, der mit geringem Abstand oberhalb und quer zur Mahlbahn angeordnet ist, beschossen, um das zerkleinerte und vom Schrapper aufgebrochene Mahlgut und die Feingutpartikel vom Grobgut zu trennen, damit diese vom Förderluftstrom aus dem Schaufelkranz mitgenommen werden können. Das bekannte Verfahren ist auf eine Klassierung des zerkleinerten Mahlgutes über die gesamte Breite der Mahlbahn nach jeder Mahlwalze gerichtet, wobei die grobe Fraktion wieder vollständig auf den Mahltisch zurückfallen und erneut zerkleinert werden soll. Der kraftvolle Luftbeschuss gegen eine Schicht des zerkleinerten Mahlgutes erfolgt zudem von unten, nachdem die Mahlgutschicht durch den Schrapper angehoben wurde. Durch den Luftbeschuss von unten und ein erstes Klassieren des Mahlgutes über die gesamte Breite des Mahltisches zum Entfernen von ausreichend zerkleinertem Feingut vom Mahltisch soll ein geringerer Energiebedarf für den Mahlprozess und ein reduzierter Druckabfall der Förderluft erreicht werden.

Im Gegensatz zu diesem bekannten Luftbeschuss wird bei dem erfindungsgemäßen Verfahren eine Feingutdüse von oben auf eine Feingutkonzentrationszone gerichtet, welche weitgehend frei von frisch aufgegebenem, zu zerkleinerndem Mahlgut ist.

Durch Versuche an einer Labor-Wälzmühle wurde festgestellt, dass bei Verwendung von Feingutdüsen gemäß der Erfindung der spezifische Arbeitsbedarf erheblich gesenkt werden kann. Es wurde in Vergleichsversuchen eine Verringerung des spezifischen Arbeitsbedarfs von ca. 20% bei einem Düsenvordruck von 1 bar festgestellt. Prinzipiell haben die Versuche gezeigt, dass mit Hilfe der Feingutdüsen und definiert ausgerichteten Luftstrahlen, insbesondere von oben, Feingut ausgeblasen und dadurch eine Übermahlung und Mühlenvibrationen verhindert beziehungsweise erheblich verringert werden können.

Das erfindungsgemäße lokale Ausblasen des Feingutes aus einer Feingutkonzentrationszone unmittelbar nach jeder Mahlwalze gewährleistet somit eine Reduktion der Mühlenvibrationen und verringert gleichzeitig den spezifischen Arbeitsbedarf an der Mahlschüssel um ca. 20%, ohne dass auf andere Art und Weise in die Konstruktion und Verfahrenstechnik der Mühle eingegriffen werden muss.

Es ist vorteilhaft, dass mit Hilfe der erfindungsgemäßen Feingutdüsen die Höhe des Staurandes am Mahlschüsselumfang und der spezifische Energiebedarf verfahrenstechnisch entkoppelt werden. Es können nunmehr höhere Stauränder zwecks Steigerung des Durchsatzes ohne Nachteile für den Energiebedarf an der Mahlschüssel eingesetzt werden.

Ein weiterer Vorteil besteht darin, dass das durch Entfernung des Feinguts vergröberte Mahlgut ohne zunehmende Vibrationen mit einem höheren Arbeitsdruck zerkleinert werden kann, so dass der Zerkleinerungsfortschritt ansteigt. Dadurch verringert sich der innere Umlauf und es sinkt der Differenzdruck, so dass der Durchsatz der Wälzmühle auch auf diese Weise gesteigert werden kann.

Vorteilhaft werden die Luftstrahlen aus den Feingutdüsen bezüglich Massestrom und Geschwindigkeit entsprechend den jeweiligen Erfordernissen eingestellt. Aufgrund der Einstellbarkeit kann das Mahlbett gezielt lokal verändert und der gesamte Mahlprozess positiv beeinflusst werden.

Die Einstellbarkeit der Feingutdüsen beziehungsweise der austretenden Luftstrahlen kann hinsichtlich eines Neigungswinkels und eines Ausblaswinkels erfolgen, so dass eine Optimierung der Feingutausblasung und damit des Mahlbettes erreicht werden kann. Neigungswinkel und Ausblaswinkel werden durch die Feingutkonzentrationszone und vom Austrittsbereich der Feingutdüsen definiert und im Zusammenhang mit der Figurenbeschreibung weiter erläutert. Zweckmäßigerweise können die Luftstrahlen aus den Feingutdüsen in Bezug auf Massestrom und Geschwindigkeit eingestellt und verändert werden, wobei die Geschwindigkeit einen Wert im Bereich zwischen 10 m/s und der Schallgeschwindigkeit des verwendeten Gases aufweisen kann, wobei hierzu speziell geformte Düsen eingesetzt werden können (Lavaldüsen).

Es liegt im Rahmen der Erfindung, nicht nur Druckluft über eine Druckluftleitung außerhalb der Wälzmühle den Feingutdüsen zuzuführen, sondern auch andere Gase oder auch Dampf über die Feingutdüsen auf die Feingutkonzentrationszonen der einzelnen Mahlwalzen zu richten und das Feingut aus- beziehungsweise hochzublasen.

Bei entsprechender Ausbildung der Feingutdüsen können die Luft-, Gas- oder Dampfstrahlen mit einer Temperatur zugeführt werden, welche einen Wert im Bereich zwischen -50°C und 800°C aufweist. Gase tiefer Temperaturen können beispielsweise eingesetzt werden, um Materialien, die bei Raumtemperatur duktil sind, künstlich zu verspröden, und Dämpfe höherer Temperatur können sich eignen, um gemahlenes Gut gezielt für nachfolgende Prozesse lokal zu konditionieren.

Eine Wälzmühle ist in an sich bekannter Weise als Luftstrom-Wälzmühle beziehungsweise Walzenschüsselmühle ausgebildet und weist eine rotierende Mahlschüssel mit einer nahezu horizontalen Mahlbahn und einen Staurand am Mahlschüsselrand auf und ist mit Feingutdüsen versehen. Die Feingutdüsen sind erfindungsgemäß derart angeordnet, dass jeweils ein Luftstrahl von oben auf eine Feingutkonzentrationszone direkt nach jeder Mahlwalze und an einem angrenzenden Staurandbereich gerichtet ist und das hier angestaute Feingut hochbläst und dem aufsteigenden Förderluftstrom zuführt.

Durch die erfindungsgemäß ausgerichteten Feingutdüsen auf einen definierten, relativ kleinen Bereich unmittelbar nach einer Mahlwalze und an einem Staurandbereich wird das Feingut hochgeblasen, bevor frisches, von der Stirnseite der Walzen abgelenktes Mahlgut sich mit dem Feingut vermischen beziehungsweise sich über dieses Feingut legen kann.

Es ist zweckmäßig, die Feingutdüsen, welche nach jeder Mahlwalze angeordnet sind, winkeleinstellbar auszubilden, damit das aus dem Walzenspalt zwischen einer Mahlwalze und der Mahlschüssel austretende Feingut durch den jeweils einstellbaren Luftstrahl aufgewirbelt und hochgeblasen werden kann. Das gesamte Feingut oder zumindest große Anteile des erzeugten Feingutes können dann der mit relativ hoher Geschwindigkeit aus einem Schaufelkranz austretenden Förderluft zugeführt und pneumatisch nach oben zu einem Sichter transportiert werden.

Es ist von Vorteil, dass die Feingutdüsen jeweils auf die Feingutkonzentrationszone gerichtet sind, in welcher sich der größte Teil des bei der Vermahlung entstehenden Feingutes ansammelt beziehungsweise durch den Staurand angestaut wird. Damit kann in einer außerordentlich effizienten Weise eine Abführung des Feingutes und gleichzeitig eine Optimierung des Mahlbettes zwecks Verhinderung von Mühlenvibrationen erreicht werden.

Durch Versuche wurde festgestellt, dass es zweckmäßig ist, die Feingutdüsen mit wenigstens einer Düsenöffnung für einen austretenden Luftstrahl in einem definierten Abstand von der Zerkleinerungszone jeder Mahlwalze anzuordnen. Der Abstand kann einen Wert im Bereich von 200 bis 1200 mm aufweisen und ist im Wesentlichen von der Düsenform der Feingutdüsen abhängig.

Wenn die Feingutdüsen einen Austrittsbereich mit wenigstens einer Düsenöffnung für den austretenden Luftstrahl und einen Zuleitungsbereich aufweisen, welcher sich vom Mühlengehäuse radial über die Mahlbahn und mit Abstand oberhalb des Mahlbettes beziehungsweise eines Feingutbereichs und/oder der Feingutkonzentrationszone erstreckt, kann der Austrittsbereich mit der Düsenöffnung nach unten und außen in Richtung Staurandbereich und auf die Feingutkonzentrationszone gerichtet werden.

Es wurde in Laborversuchen mit einer Labormühle gefunden, dass Luft mit einem Vordruck in der Düsenringleitung außerhalb des Mühlengehäuses von etwa 0,5 bar bis etwa 1,5 bar, insbesondere von etwa 1 bar, zugeführt werden kann. In Großanlagen sind die Volumenströme höher und die Drücke niedriger.

Die Feingutdüsen können im Prinzip jede beliebige Form aufweisen und beispielsweise als Rundstrahldüsen oder Flachdüsen ausgebildet sein. Außerdem können sie ein- oder mehrstrahlig ausgebildet sein, und es ist auch die Verwendung mehrerer Düsen mit gleicher oder unterschiedlicher Winkeleinstellung möglich.

Eine alternative Luftzuführung zu den einzelnen Feingutdüsen weist eine beispielsweise radial in das Zentrum der Wälzmühle führende Leitung für den gesamten, für die Feingutdüsen vorgesehenen Luftstrom auf. Im Zentrum der Wälzmühle, zweckmäßigerweise innerhalb eines Grießekonus, kann eine Verteilereinrichtung angeordnet werden, von welcher gleichmäßige Luftströme beziehungsweise Gasströme oder Ströme eines anderen Mediums über Leitungen, beispielsweise Stichleitungen, auf die einzelnen Feingutdüsen verteilt werden.

Aufgrund der zentralen Anordnung der Verteilereinrichtung ist eine strömungsgünstige Leitungsführung zu den Feingutdüsen in rotationssymmetrischer Form möglich.

Es ist besonders vorteilhaft, dass eine Wälzmühle mit den erfindungsgemäßen Feingutdüsen bei schwer mahlbaren oder sehr fein aufzumahlenden Mahlgütern eingesetzt werden können, bei denen aufgrund der gewünschten Feinheit ein hoher Staurand verwendet werden muss. Bevorzugt wird eine erfindungsgemäße Wälzmühle für die Vermahlung von Zementklinker, Hüttensand und auch für sehr harte Zementrohmaterialien und Erze eingesetzt.

Neben den bereits beschriebenen Vorteilen wird durch die erfindungsgemäße Ausrichtung der Feingutdüsen erreicht, dass nur Feingutmaterial aufgewirbelt und ausgeblasen wird. Die Grobpartikel beziehungsweise gröberen Fraktionen werden von den Feingutdüsen nicht erfasst, da die Feingutdüsen auf einen definierten Bereich ausgerichtet sind und das in hoher Konzentration vorliegende Feingut hochwirbeln.

Durch die erfindungsgemäße Ausrichtung der Feingutdüsen erfolgt ein Transport des Feingutes nach außen in den aufsteigenden Luftstrom aus dem Schaufelkranz, so dass ein wirkungsvoller Transport zum Sichter gewährleistet ist.

Ein weiterer Vorteil besteht darin, dass die Feingutdüsen im Prinzip keinem Verschleiß unterliegen, da kein direkter Kontakt mit dem Mahlgut auf der Mahlschüssel vorhanden ist.

Ein wesentlicher Vorteil besteht in der verfahrenstechnischen Entkopplung von Staurandhöhe und Energiebedarf, wodurch der Staurand ohne nachteilige Folgen für Vibrationen und Energiebedarf im Interesse eines maximalen Durchsatzes erhöht werden kann. Damit besteht die Möglichkeit, für gleiche Mühlendurchsätze kleinere Mühlen einzusetzen, was wiederum mit einem geringeren investitionstechnischen Aufwand und Betriebskosten verbunden ist.

Die Erfindung wird nachstehend anhand einer Zeichnung weiter erläutert; in dieser zeigen in einer stark schematisierten Darstellung
- Fig. 1: eine Draufsicht auf eine Mahlschüssel mit einer erfindungsgemäßen Wälzmühle;
- Fig. 2: eine Ansicht nach Linie II-II in Fig. 1;
- Fig. 3: eine Vergrößerung des Ausschnittes III in Fig. 1 und
- Fig. 4: eine Ansicht gemäß Pfeil IV in Fig. 3 und
- Fig. 5: einen vertikalen Schnitt durch eine erfindungsgemäße Wälzmühle mit einer alternativen Luftzuführung.

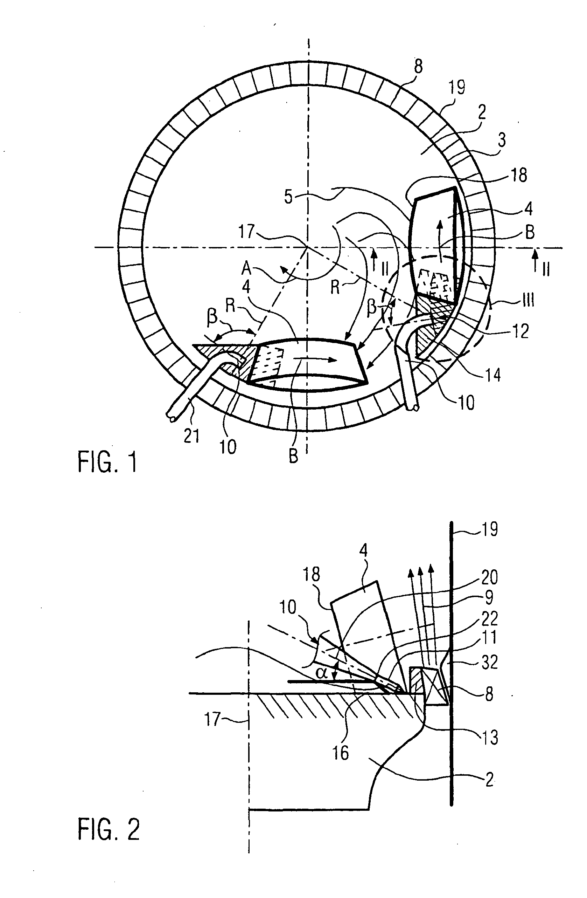

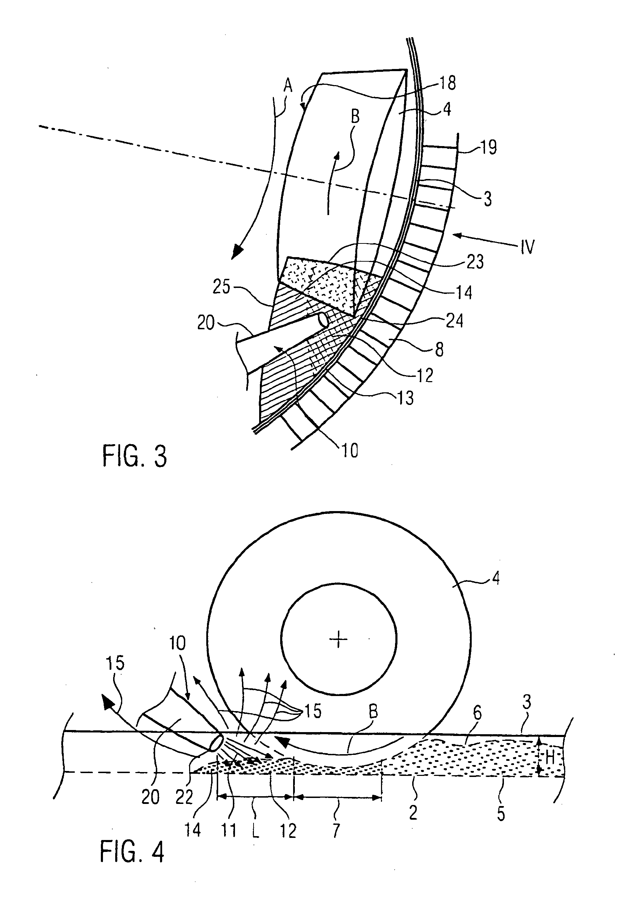

In Fig. 1 ist eine Mahlschüssel 2 einer erfindungsgemäßen Wälzmühle gezeigt, welche gemäß Pfeil A um eine Längsachse 17 rotiert. Die Mahlschüssel 2 ist an ihrem Umfang mit einem Staurand 3 versehen, dessen Höhe H und Formgebung beispielhaft aus den Figuren 2 und 4 hervorgeht.

Auf der Mahlschüssel 2 mit dem umlaufenden und mitdrehenden Staurand 3 laufen in diesem Beispiel vier hydraulisch angepresste Mahlwalzen 4, von denen in Fig. 1 nur zwei Mahlwalzen 4 gezeigt sind. Es können im Prinzip zwischen zwei und acht Mahlwalzen eingesetzt werden. Durch die Drehung der Mahlschüssel 2 wird den Mahlwalzen 4 das zentral aufgegebene, zu zerkleinernde Mahlgut 5 auf spiralförmigen Bahnen zugeführt und in einem Spalt zwischen Mahlwalzen 4 und Mahlschüssel 2 beziehungsweise Mahlbahn 16 eingezogen und in einer Zerkleinerungszone 7 (siehe Fig. 4) zerkleinert.

Durch den Staurand 3 wird das zugeführte und zerkleinerte Mahlgut 5 angestaut und auf der Mahlschüssel 2 gehalten. Genügend zerkleinertes Feingut 15 liegt unmittelbar nach der Zerkleinerungszone 7 (Fig. 4) in einem Feingutbereich 14 vor, welcher in Fig. 1 schraffiert dargestellt ist und die Form eines spitzwinkligen Dreiecks aufweist, dessen Grundlinie 23 von der Begrenzung der Zerkleinerungszone 7 gebildet ist und dessen äußerer Schenkel 24 den Feingutbereich 14 begrenzt (siehe Fig. 3). Der innere Schenkel 25 des Dreiecks wird von einer Verlängerung einer Stirnseite 18 der zugehörigen Mahlwalze 4 gebildet. Der Feingutbereich 14 ist auch in der Vergrößerung der Fig. 3 einfach schraffiert gezeigt. Fig. 3 verdeutlicht weiterhin einen zweiten, kleineren Dreiecksbereich innerhalb des Feingutbereichs 14, und dieser kleinere Bereich ist eine Feingutkonzentrationszone 12, welche doppelt schraffiert dargestellt ist.

Auf die Feingutkonzentrationszone 12, in welcher das unmittelbar zerkleinerte Feingut aufgestaut wird, ist jeweils eine Feingutdüse 10 mit einem Austrittsbereich 20 und einer Düsenöffnung 22 für einen Luftstrahl 11 gerichtet (siehe auch Fig. 2 bis 4). Insbesondere die Figuren 2 und 4 zeigen, dass die Feingutdüse 10 mit dem Austrittsbereich 20 und der Düsenöffnung 22 von oben auf die Feingutkonzentrationszone 12 gerichtet ist, wodurch das Feingut 15, noch bevor sich frisches Mahlgut darüberlegen kann, ausgeblasen und einem Förderluftstrom 9 (Fig. 2), welcher durch einen Schaufelkranz 8 zugeführt wird, pneumatisch nach oben zu einem Sichter (nicht dargestellt) transportiert werden kann.

Das Feingut 15 in der Feingutkonzentrationszone 12 und auch im Feingutbereich 14 ist nahezu frei von frischem Mahlgut, da dieses, wie insbesondere aus Fig. 1 hervorgeht, von der Stirnseite 18 der zugeordneten Mahlwalze 4 abgelenkt und erst von der folgenden Mahlwalze 4 eingezogen wird.

Die Drehrichtung der auf der Mahlschüssel 2 beziehungsweise dem Mahlbett 6 abrollenden Mahlwalzen 4 ist durch den Pfeil B angegeben. Pfeil A zeigt die Drehrichtung der Mahlschüssel 2.

Fig. 1 verdeutlicht die Ausbildung der Feingutdüsen 10, welche durch ein Mühlengehäuse 19 beziehungsweise vom Mühlengehäuse 19 mit einem rohrförmigen Zuleitungsbereich 21 etwa radial nach innen und beabstandet zum Mahlbett 6 geführt und mit einem abgewinkelten, nach unten in Richtung Mahlbett 6 gerichteten Austrittsbereich 20 versehen sind (siehe auch Figuren 2 und 4). Die Zuführung der Luft beziehungsweise des Gases kann auch vom Zentrum der Mühle nach außen an die Feingutdüsen erfolgen.

Die Düsenöffnung 22 der Feingutdüse 10 ist in den Ausführungsbeispielen kreisrund ausgebildet. Der Austrittsbereich 20 ist gemäß Fig. 2 mit einem Neigungswinkel α gegenüber der Mahlschüssel 2 ausgebildet. Der Neigungswinkel α kann zwischen 15° und 110° betragen. In Fig. 2 beträgt der Neigungswinkel α etwa 45°, wodurch die Luftstrahlen 11 auf einen Eckbereich zwischen Mahlbahn 16 und Staurandbereich 13 gerichtet sind.

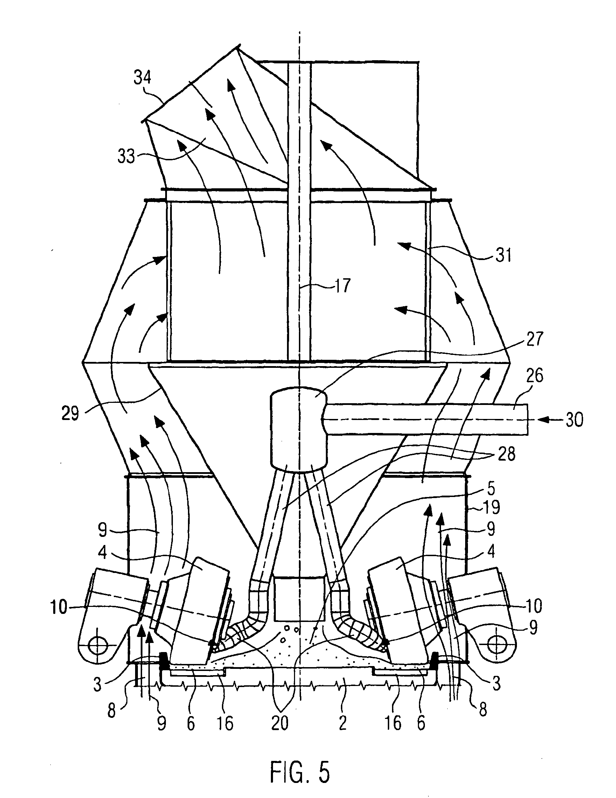

Fig. 4 zeigt das Aus- und Hochblasen des Feingutes 15 und die Entfernung beziehungsweise den Abstand L zwischen dem Ende der Zerkleinerungszone 7 der Mahlwalze 4 und der Düsenöffnung 22 der zugeordneten Feingutdüse 10. Das Feingut 15 aus der Feingutkonzentrationszone 12 wird nach oben geblasen und gelangt in den Förderluftstrom 9 (Fig. 2), welcher aus dem Schaufelkranz 5 zwischen Mahlschüssel 2 und Mühlengehäuse 19 austritt und durch einen Wulstpanzer 25 am Mühlengehäuse 19 nach innen abgelenkt wird. Dadurch wird der pneumatische Transport des hochgeblasenen Feingutes 15 nach oben und in Richtung eines Sichters 31 (siehe Fig. 5) erleichtert.

Fig. 3 verdeutlicht mit der vergrößerten Darstellung einer Mahlwalze 4 die Größenverhältnisse der Feingutkonzentrationszone 12, auf welche jeweils die winkelverstellbare Feingutdüse 10 mit der Düsenöffnung 22 am Austrittsbereich 20 gerichtet ist, im Verhältnis zu dem Feingutbereich 9.

Fig. 4 zeigt die Höhe H des Staurandes 3 am Umfang der Mahlschüssel 2, die Ausbildung eines Mahlbettes 6 auf der Mahlschüssel 2 und den Einzugsbereich sowie die Zerkleinerungszone 7 zwischen Mahlwalze 4 und Mahlschüssel 2.

Aus Fig. 1 mit den hier dargestellten zwei Feingutdüsen 10 nach jeweils einer Mahlwalze 4 geht der Ausblaswinkel β, unter welchem der Austrittsbereich 20 vom nahezu radialen Zuleitungsbereich 21 abgewinkelt ist, hervor. Der Ausblaswinkel β wird von der Längsachse des Austrittsbereichs 20 und einer Radialen R der Mahlschüssel 2, welche durch die Düsenöffnung 22 geführt ist, eingeschlossen.

Fig. 5 zeigt eine erfindungsgemäße Wälzmühle, welche als Luftstrom-Wälzmühle ausgebildet ist und eine alternative Luftzuführung aufweist. In die Wälzmühle ist ein Sichter 31 integriert, und ein Feingut-Luft-Gemisch 33 wird über einen Feingutaustrag ausgetragen, während Grobgutpartikel (nicht dargestellt) über einen Grießekonus 29 wieder auf die Mahlschüssel 2 gelangen und erneut dem Mahlprozess unterworfen werden.

Der gesamte, für die Feingutdüsen 10 vorgesehene Luftstrom 30 wird über eine Zuleitung 26, welche beispielsweise radial in Richtung Zentrum der Mühle ausgerichtet sein kann, einer Verteilereinrichtung 27 und über Stichleitungen 28, welche vorteilhaft gleichmäßig von der Verteilereinrichtung 27 abgehen, den einzelnen Feingutdüsen 10 zugeführt.

Fig. 5 verdeutlicht, dass die Verteilereinrichtung 27, beispielsweise ein Verteilertopf im Zentrum des Grießekonus 29 angeordnet ist, und dass die Stichleitungen 28 nach unten gerichtet sind und endseitig mit dem Austrittsbereich 20 und der Düsenöffnung 22 der Feingutdüsen 10 versehen sind. Die zentrale Zuführung des gesamten Luftstroms 30 für die Feingutdüsen 10 ermöglicht eine strömungsgünstige Leitungsführung in rotationssymmetrischer Form. Die Stichleitungen 28 können am unteren Teil die Wandung des Grießekonus 29 durchdringen und an diesem befestigt sein.

Es sei darauf hingewiesen, dass die Elemente der Luftzuführung in Fig. 5 nicht maßstabsgerecht, sondern zur besseren Erkennbarkeit größer als die übrigen Bauteile der Luftstrom-Wälzmühle dargestellt wurden.

## Patentansprüche

1. Verfahren zur Zerkleinerung von Mahlgut in einer Wälzmühle,
bei welchem zu zerkleinerndes Mahlgut (5) einer rotierenden Mahlschüssel (2) aufgegeben und mittels ortsfester Mahlwalzen (4), welche auf einem vom aufgegebenen Mahlgut (5) gebildeten Mahlbett (6) kraftbeaufschlagt abrollen, in einer Zerkleinerungszone (7) zerkleinert wird und
das zerkleinerte Mahlgut (5) nach jeder Mahlwalze (4) mit Luft aus einer düsenartigen Einrichtung beaufschlagt und Feingut ausgeblasen und einem aus einem Schaufelkranz (8) zwischen Mahlschüssel (2) und Mühlengehäuse (19) aufsteigendem Förderluftstrom (9) und einem Sichtprozess zugeführt wird, wobei als düsenartige Einrichtung eine Feingutdüse (10) eingesetzt wird, **dadurch gekennzeichnet,**
**dass** auf der mit einem Staurand (3) versehenen Mahlschüssel (2) eine Feingutkonzentrationszone (12), welche weitgehend frei von aufgegebenem, zu zerkleinerndem Mahlgut (5) ist, an einem Staurandbereich (13) unmittelbar nach der Zerkleinerungszone (7) jeder Mahlwalze (4) angestaut wird,
**dass** ein Luftstrahl (11) oder Gasstrahl oder Dampfstrahl mit festgelegtem Impuls von oben aus der Feingutdüse (10) auf die Feingutkonzentrationszone (12) gerichtet und das Feingut (15) in den aufsteigenden Förderluftstrom (9) hochgeblasen wird, wobei die Feingutdüsen (10) jeweils mit einem Austrittsbereich (20) für den Luftstrahl (11) mit einem Neigungswinkel α, welcher im Bereich zwischen 15° und 110° liegt, auf die Feingutkonzentrationszone (12) und den begrenzenden Staurandbereich (13) gerichtet werden.

2. Verfahren nach Anspruch 1,
**dadurch gekennzeichnet,**
**dass** das mit Hilfe der Luftstrahlen (11) aus den Feingutdüsen (10) hochgeblasene und dem Förderluftstrom (9) zugeführte Feingut (15) einer Übermahlung entzogen wird.

3. Verfahren nach Anspruch 1 oder 2,
**dadurch gekennzeichnet,**
**dass** die Luftstrahlen (11) der Feingutdüsen (10) bezüglich Massenstrom und Geschwindigkeit eingestellt werden.

4. Verfahren nach Anspruch 3,
**dadurch gekennzeichnet,**
**dass** die Geschwindigkeit der aus den Feingutdüsen (10) austretenden Luftstrahlen (11) oder Gasstrahlen auf einen Wert im Bereich zwischen 10 m/s und Schallgeschwindigkeit des verwendeten Gases eingestellt wird.

5. Verfahren nach einem der vorhergehenden Ansprüche,
**dadurch gekennzeichnet,**
**dass** die Feingutdüsen (10) wenigstens mit ihrem Austrittsbereich (20) gegenüber der Mahlschüssel (2) und/oder gegenüber einer Radialen R der Mahlschüssel (2) eingestellt werden.

6. Verfahren nach Anspruch 5,
**dadurch gekennzeichnet,**
**dass** die Feingutdüsen (10) mit ihrem Austrittsbereich (20) gegenüber der Radialen R mit einem Ausblaswinkel β, welcher einen Wert im Bereich zwischen 10° und 110° aufweist, auf die Feingutkonzentrationszone (12) und den Staurandbereich (13) gerichtet werden.

7. Wälzmühle
mit einem Mühlengehäuse (19) und einer rotierenden Mahlschüssel (2) mit einer nahezu horizontalen Mahlbahn (16) und
mit stationären, hydraulisch anpressbaren Mahlwalzen (4), welche im Betrieb auf einem von aufgegebenem und zu zerkleinerndem Mahlgut (5) auf der Mahlbahn (16) gebildeten Mahlbett (6) abrollen und das Mahlgut (5) in einer Zerkleinerungszone (7) zwischen Mahlwalze (4) und Mahlbahn (16) zerkleinern,
mit einem Schaufelkranz (8) zwischen der Mahlschüssel (2) und dem Mühlengehäuse (19) zur Zuführung eines aufsteigenden Förderluftstroms (9) für den pneumatischen Transport von Feingut (15) zu einem Sichter und
mit düsenartigen Einrichtungen zur Luft- oder Gas- oder Dampf beaufschlagung des Mahlbettes (6), welche nach jeder Mahlwalze (4) angeordnet sind, wobei als düsenartige Einrichtungen Feingutdüsen (10) angeordnet sind, insbesondere zur Durchführung des Verfahrens nach einem der Ansprüche 1 bis 6,
**dadurch gekennzeichnet,**
**dass** die Mahlschüssel (2) mit einem Staurand (3) versehen ist und die Feingutdüsen (10) auf eine Feingutkonzentrationszone (12) an einem Staurandbereich (13) direkt nach jeder Mahlwalze (4) ausgerichtet sind, so dass jeweils ein Luftstrahl (11) von oben das angestaute Feingut (15) in den aufsteigenden Förderluftstrom (9) hochbläst, und
**dass** die Höhe des Staurandes (3) am Umfang der Mahlschüssel (2) in Abhängigkeit von der Ausblasung des Feinguts (15) aus den Feingutkonzentrationszonen (12) nach den Mahlwalzen (4) variabel einstellbar ist.

8. Wälzmühle nach Anspruch 7,
**dadurch gekennzeichnet,**
**dass** die Feingutdüsen (10) einen Austrittsbereich (20) mit wenigstens einer Düsenöffnung (22) für einen Luftstrahl (11) sowie einen Zuleitungsbereich (21) aufweisen,
**dass** der Zuleitungsbereich (21) vom Mühlengehäuse (19) radial zumindest teilweise über die Mahlbahn (16) reicht und mit Abstand oberhalb des Mahlbettes (6) mit einem Feingutbereich (14) und der Feingutkonzentrationszone (12) angeordnet ist und
**dass** der Austrittsbereich (20) mit der Düsenöffnung (22) nach unten und außen in Richtung Staurand (3) beziehungsweise Staurandbereich (13) und auf die Feingutkonzentrationszone (12) gerichtet ist.

9. Wälzmühle nach Anspruch 7 oder 8,
**dadurch gekennzeichnet,**
**dass** eine Düsenringleitung außerhalb des Mühlengehäuses (10) angeordnet ist, aus weicher Luft oder ein anderes Medium, beispielsweise Gas oder Dampf, den Feigutdüsen (10) über deren Zuleitungsbereich (21) zuführbar ist.

10. Wälzmühle nach Anspruch 7,
**dadurch gekennzeichnet,**
**dass** die Feingutdüsen (10) einen Austrittsbereich (20) mit wenigstens einer Düsenöffnung (22) für den Luftstrahl (11) aufweisen,
**dass** der Austrittsbereich (20) jeweils endseitig an Stichleitungen (28) ausgebildet ist, welche von einer Verteilereinrichtung (27) abgehen, und
**dass** die Verteilereinrichtung (27) zentral oberhalb der Mahlschüssel (2) angeordnet und mit einer Zuleitung (26) für den gesamten, auf die Feingutdüsen (10) zu verteilenden Luftstrom (30) verbunden ist. (Fig. 5)

11. Wälzmühle nach Anspruch 10,
**dadurch gekennzeichnet,**
**dass** die Verteilereinrichtung (27) als Verteilertopf ausgebildet und innerhalb eines Grießekonus (29) angeordnet ist.

12. Wälzmühle nach Anspruch 10 oder 11,
**dadurch gekennzeichnet,**
**dass** die Stichleitungen (28), zumindest jedoch der Austrittsbereich (20) der Feingutdüsen (10) verstellbar ausgebildet und nach unten und außen in Richtung Staurand (3) beziehungsweise Staurandbereich (13) und auf die Feingutkonzentrationszone (12) gerichtet sind.

13. Wälzmühle nach einem der Ansprüche 10 bis 12,
**dadurch gekennzeichnet,**
**dass** die Stichleitungen (28), zumindest jedoch der Austrittsbereich (20) der Feingutdüsen (10) eine strömungsgünstige rotationssymmetrische Ausbildung aufweisen.

14. Wälzmühle nach einem der Ansprüche 8 bis 13,
**dadurch gekennzeichnet,**
**dass** die Feingutdüsen (10) mit einem vorgebbaren Neigungswinkel α und/oder Ausblaswinkel β nach jeder Mahlwalze (4) angeordnet sind, wobei der Neigungswinkel α jeweils von der Längsachse des Austrittsbereichs (20) und der Mahlbahn (16) und der Ausblaswinkel β von der Längsachse des Austrittsbereichs (20) und einer Radialen R der Mahlschüssel (2), welche durch die Düsenöffnung (22) geführt ist, eingeschlossen ist.

## Claims

1. Method for grinding mill material in a roller mill,
wherein mill material to be ground (5) is fed to a rotating grinding pan (2) and is ground by means of stationary grinding rollers (4), which roll in a force impacted way on a grinding bed (6) formed by the supplied mill material (5), in a grinding zone (7) and
the ground material (5) is impacted after each grinding roller (4) with air from a nozzle-like device and fine material is blown out and fed to a conveying air flow (9) rising from a blade ring (8) between the grinding pan (2) and mill housing (19) and to a classifying process, wherein a fine material nozzle (10) is used as a nozzle-like device,
**characterised in that**
a fine material concentration zone (12) which is extensively free of supplied mill material (5) to be ground is accumulated on the grinding pan (2) provided with a retention rim (3), on a retention rim region (13) directly after the grinding zone (7) of each grinding roller (4),
an air jet (11) or gas jet or vapour jet with defined impulse is directed from above from the fine material nozzle (10) onto the fine material concentration zone (12) and the fine material (15) is blown upwards into the rising conveying air flow (9), wherein the fine material nozzles (10) are respectively directed with an outlet region (20) for the air jet (11) with an angle of inclination α which lies in the range of between 15° and 110° onto the fine material concentration zone (12) and the adjacent retention rim region (13).

2. Method according to claim 1,
**characterised in that**
the fine material (15) blown upwards with the aid of the air jets (11) from the fine material nozzles (10) and fed to the conveying air flow (9) is deprived of an over-grinding.

3. Method according to claim 1 or 2,
**characterised in that**
the air jets (11) of the fine material nozzles (10) are adjusted in relation to mass flow and speed.

4. Method according to claim 3,
**characterised in that**
the speed of the air jets (11) or gas jets leaving the fine material nozzles (10) is adjusted to a value in the range of between 10 m/s and sonic velocity of the gas used.

5. Method according to one of the preceding claims,
**characterised in that**
the fine material nozzles (10) are adjusted at least with their outlet region (20) in relation to the grinding pan (2) and / or in relation to a radial R of the grinding pan (2).

6. Method according to claim 5,
**characterised in that**
the fine material nozzles (10) are directed with their outlet region (20) in relation to the radial R with a blow-out angle β which has a value in the range of between 10° and 110° onto the fine material concentration zone (12) and the retention rim region (13).

7. Roller mill
comprising a mill housing (19) and a rotating grinding pan (2) with a virtually horizontal grinding track (16) and
stationary, hydraulically pressable grinding rollers (4) which in operation roll on a grinding bed (6) formed on the grinding track (16) by supplied mill material (5) to be ground and grind the mill material (5) in a grinding zone (7) between grinding roller (4) and grinding track (16),
a blade ring (8) between the grinding pan (2) and the mill housing (19) for supplying a rising conveying air flow (9) for the pneumatic transport of fine material (15) to a classifier and
nozzle-like devices for impacting the grinding bed (6) with air or gas or vapour, which nozzle-like devices are arranged after each grinding roller (4), wherein fine material nozzles (10) are arranged as nozzle-like devices, in particular for carrying out the method according to one of the claims 1 to 6, **characterised in that**
the grinding pan (2) is provided with a retention rim (3) and the fine material nozzles (10) are directed onto a fine material concentration zone (12) on a retention rim region (13) directly after each grinding roller (4) so that a respective air jet (11) blows the accumulated fine material (15) from above upwards into the rising conveying air flow (9), and
the height of the retention rim (3) on the periphery of the grinding pan (2) is variably adjustable in dependence upon the blow-out of the fine material (15) from the fine material concentration zones (12) after the grinding rollers (4).

8. Roller mill according to claim 7,
**characterised in that**
the fine material nozzles (10) comprise an outlet region (20) with at least one nozzle opening (22) for an air jet (11) and a feed region (21),
the feed region (21) extends from the mill housing (19) radially at least partially over the grinding track (16) and is arranged at a distance above the grinding bed (6) with a fine material region (14) and the fine material concentration zone (12)
and
the outlet region (20) is orientated with the nozzle opening (22) downwards and outwards in the direction of the retention rim (3) or retention rim region (13) and onto the fine material concentration zone (12).

9. Roller mill according to claim 7 or 8,
**characterised in that**
a nozzle ring line is arranged outside of the mill housing (10), from which air or another medium, for example gas or vapour, can be fed to the fine material nozzles (10) via their feed region (21).

10. Roller mill according to claim 7,
**characterised in that**
the fine material nozzles (10) comprise an outlet region (20) with at least one nozzle opening (22) for the air jet (11),
the outlet region (20) is formed respectively on the end side on branch lines (28) which extend from a distribution device (27) and
the distribution device (27) is arranged centrally above the grinding pan (2) and connected to a feed line (26) for the whole air flow (30) to be distributed onto the fine material nozzles (10). (Fig. 5).

11. Roller mill according to claim 10,
**characterised in that**
the distribution device (27) is formed as a distribution receptacle and is arranged within an oversize material cone (29).

12. Roller mill according to claim 10 or 11,
**characterised in that**
the branch lines (28), but at least the outlet region (20) of the fine material nozzles (10), are designed to be adjustable and are orientated downwards and outwards in the direction of the retention rim (3) or retention rim region (13) and onto the fine material concentration zone (12).

13. Roller mill according to one of the claims 10 to 12,
**characterised in that**
the branch lines (28), but at least the outlet region (20) of the fine material nozzles (10), have a flow encouraging rotationally symmetrical construction.

14. Roller mill according to one of the claims 8 to 13,
**characterised in that**
the fine material nozzles (10) are arranged with a predefinable angle of inclination α and / or blow-out angle P after each grinding roller (4), wherein the angle of inclination α is encompassed respectively within the longitudinal axis of the outlet region (20) and the grinding track (16) and the blow-out angle β within the longitudinal axis of the outlet region (20) and a radial R of the grinding pan (2) which is guided through the nozzle opening (22).

## Revendications

1. Procédé pour le broyage d'une matière à broyer dans un broyeur à cylindres,
selon lequel la matière à broyer (5) devant être broyée est apportée à un plateau de broyage (2) rotatif et broyée dans une zone de broyage (7) au moyen de cylindres de broyage (4) stationnaires, qui, sous l'application d'une force, roulent sur un lit de broyage (6) formé de la matière à broyer (5) apportée, et
la matière à broyer (5) qui a été broyée est, à la suite de chaque cylindre de broyage (4), exposée à de l'air en provenance d'un dispositif du type tuyère et évacuée par soufflage sous forme de matière fine, puis elle est acheminée jusqu'à un flux d'air de transport (9), qui est ascendant à partir d'une couronne d'aubes (8) présente entre le plateau de broyage (2) et le châssis (19) du broyeur, et jusqu'à un processus de séparation, une tuyère pour matière fine (10) étant mise en place en tant que dispositif du type tuyère,
**caractérisé :**
**en ce que**, sur le plateau de broyage (2) prévu avec un rebord (3), une zone de concentration de matière fine (12), qui est largement exempte de matière à broyer (5) apportée devant être broyée, est formée par accumulation sur une zone de rebord (13) directement après la zone de broyage (7) de chaque cylindre de broyage (4),
**en ce qu'**un jet d'air (11), ou un jet de gaz ou un jet de vapeur, est dirigé avec une impulsion déterminée provenant du haut à partir de la tuyère pour matière fine (10) sur la zone de concentration de matière fine (12), et la matière fine (15) est soufflée vers le haut dans le flux d'air de transport (9) ascendant, les tuyères pour matière fine (10) étant, chacune respectivement avec une zone de sortie (20) pour le jet d'air (11), dirigées avec un angle d'inclinaison α, qui se situe dans la plage comprise entre 15° et 110°, sur la zone de concentration de matière fine (12) et sur la zone de rebord (13) qui la délimite.

2. Procédé selon la revendication 1,
**caractérisé :**
**en ce que** la matière fine (15), soufflée vers le haut à l'aide des jets d'air (11) en provenance des tuyères pour matière fine (10) et acheminée jusqu'au flux d'air de transport (9), est évacuée par un broyage additionnel.

3. Procédé selon la revendication 1 ou 2,
**caractérisé :**
**en ce que** les jets d'air (11) des tuyères pour matière fine (10) sont soumis à un réglage en ce qui concerne le débit massique et la vitesse.

4. Procédé selon la revendication 3,
**caractérisé :**
**en ce que** la vitesse des jets d'air (11) qui sortent des tuyères pour matière fine (10), ou des jets de gaz, est réglée à une valeur située dans une plage comprise entre 10 m/s et la vitesse du son dans le gaz utilisé.

5. Procédé selon une des revendications précédentes,
**caractérisé :**
**en ce que** les tuyères pour matière fine (10), au moins en ce qui concerne leur zone de sortie (20), sont réglées par rapport au plateau de broyage (2) et/ou par rapport à un rayon R du plateau de broyage (2).

6. Procédé selon la revendication 5,
**caractérisé :**
**en ce que** les tuyères pour matière fine (10), en ce qui concerne leur zone de sortie (20), sont dirigées sur la zone de concentration de matière fine (12) et sur la zone de rebord (13) avec, par rapport au rayon R, un angle de soufflage β qui présente une valeur située dans la plage comprise entre 10° et 110°.

7. Broyeur à cylindres,
avec un châssis (19) de broyeur et un plateau de broyage (2) rotatif ayant un chemin de broyage (16) pratiquement horizontal, et
avec des cylindres de broyage (4) stationnaires pouvant être appuyés hydrauliquement, qui, en fonctionnement, roulent sur un lit de broyage (6) formé sur le chemin de broyage (16) d'une matière à broyer (5) apportée et broient la matière à broyer (5) dans une zone de broyage (7), entre le cylindre de broyage (4) et le chemin de broyage (16),
avec une couronne d'aubes (8) présente entre le plateau de broyage (2) et le châssis (19) de broyeur pour l'acheminement d'un flux d'air de transport (9) ascendant destiné au transport pneumatique de matière fine (15) jusqu'à un dispositif de séparation, et
avec, pour la soumission du lit de broyage (6) à l'application de l'action d'air ou d'un gaz ou d'une vapeur, des dispositifs du type tuyère qui sont disposés après chaque cylindre de broyage (4), des tuyères pour matière fine (10) étant mises en place en tant que dispositifs du type tuyère, plus particulièrement pour la mise en oeuvre du procédé selon une des revendications 1 à 6,
**caractérisé :**
**en ce que** le plateau de broyage (2) est prévu avec un rebord (3) et les tuyères pour matière fine (10) sont dirigées vers une zone de concentration de matière fine (12) présente sur une zone du rebord (13) directement après chaque cylindre de broyage (4), de telle sorte qu'à chaque fois un jet d'air (11) provenant du haut assure un soufflage, vers le haut, de la matière fine accumulée (15) dans le flux d'air de transport (9) ascendant, et
**en ce que** la hauteur du rebord (3) à la périphérie du plateau de broyage (2) est réglable de manière variable en fonction du soufflage de la matière fine (15) en provenance de la zone de concentration de matière fine (12) présente après les cylindres de broyage (4).

8. Broyeur à cylindres selon la revendication 7,
**caractérisé :**
**en ce que** les tuyères pour matière fine (10) comprennent une zone de sortie (20) avec au moins une ouverture de tuyère (22) pour un jet d'air (11), ainsi qu'une zone d'alimentation (21),
**en ce que** la zone d'alimentation (21) s'étend de manière radiale à partir du châssis (19) du broyeur au moins en partie jusqu'au-dessus du chemin de broyage (16) et est disposée à une certaine distance au-dessus du lit de broyage (6), avec une zone de matière fine (14) et avec la zone de concentration de matière fine (12), et
**en ce que** la zone de sortie (20) est dirigée, avec l'ouverture de tuyère (22) vers le bas et vers l'extérieur, en direction du rebord (3) ou respectivement de la zone du rebord (13), ainsi que sur la zone de concentration de matière fine (12).

9. Broyeur à cylindres selon la revendication 7 ou 8,
**caractérisé :**
**en ce qu'**il est disposé, à l'extérieur du châssis (19) de broyeur, une conduite circulaire de tuyère, à partir de laquelle de l'air ou un autre milieu, par exemple un gaz ou de la vapeur, peut être fourni aux tuyères pour matière fine (10), au-dessus de la zone d'alimentation (21) de ces dernières.

10. Broyeur à cylindres selon la revendication 7,
**caractérisé :**
**en ce que** les tuyères pour matière fine (10) comprennent une zone de sortie (20), avec au moins une ouverture de tuyère (22) pour le jet d'air (11),
**en ce que** la zone de sortie (20), à chaque fois à l'extrémité, est formée de conduites de dérivation (28), qui sortent d'un dispositif de distribution (27), et
**en ce que** le dispositif de distribution (27) est disposé de manière centrale au-dessus du plateau de broyage (2) et est relié à une conduite d'alimentation (26) destinée au flux d'air global (30) devant être réparti vers les tuyères pour matière fine (10)(fig. 5).

11. Broyeur à cylindres selon la revendication 10,
**caractérisé :**
**en ce que** le dispositif de distribution (27) se présente sous la forme d'une chambre de répartition et est disposé à l'intérieur d'une goulotte conique (29).

12. Broyeur à cylindres selon la revendication 10 ou 11,
**caractérisé :**
**en ce que** les conduites de dérivation (28), au moins toutefois au niveau de la zone de sortie (20) des tuyères pour matière fine (10) agencée de manière à être réglable, sont dirigées vers le bas et vers l'extérieur dans la direction du rebord (3) ou respectivement de la zone du rebord (13) et sur la zone de concentration de matière fine (12).

13. Broyeur à cylindres selon une des revendications 10 à 12,
**caractérisé :**
**en ce que** les conduites de dérivation (28), au moins toutefois au niveau de la zone de sortie (20) des tuyères pour matière fine (10), consistent en un mode de réalisation à symétrie de rotation d'une forme favorisant l'écoulement.

14. Broyeur à cylindres selon une des revendications 8 à 13,
**caractérisé :**
**en ce que** les tuyères pour matière fine (10) sont mises en place avec un angle d'inclinaison α pouvant être prédéfini et/ou un angle de soufflage β après chaque cylindre de broyage (4), l'angle d'inclinaison α étant défini, à chaque fois, par rapport à l'axe longitudinal de la zone de sortie (20) et au chemin de broyage (16), et l'angle de soufflage β étant défini par rapport à l'axe longitudinal de la zone de sortie (20) et à un rayon R du plateau de broyage (2) qui passe par l'ouverture de tuyère (22).
